# EUROPÄISCHE PATENTSCHRIFT

(11) **EP 0 410 349 B1**
(45) Veröffentlichungstag und Bekanntmachung des Hinweises auf die Patenterteilung: **09.03.1994**
(21) Anmeldenummer: 90114077.2
(22) Anmeldetag: 23.07.1990
(51) Int. Cl.: A61G 13/10, A61G 13/00

(54) **Transportwagen für Operationstischplatten**
Transport trolley for operating table tops
Chariot de transport pour des dessus de tables d'opérations

(30) Priorität: 24.07.1989 DE 3924390
(43) Veröffentlichungstag der Anmeldung: 30.01.1991
(73) Patentinhaber: Stierlen-Maquet Aktiengesellschaft, D-76437 Rastatt (DE)
(72) Erfinder: Schnelle, Eberhard, Dr.-Ing., D-7550 Rastatt (DE); Dornauer, Matthias, Dipl.-Ing., D-7500 Karlsruhe 41 (DE)
(74) Vertreter: Schaumburg, Thoenes & Thurn

(56) Entgegenhaltungen:
- DE-C- 1 158 663
- DE-U- 8 815 279

## Beschreibung

Die Erfindung betrifft einen Transportwagen für Operationstischplatten eines Operationstisches mit fester Operationstischsäule und abhebbarer Operationstischplatte.

Bekannt sind Transportwagen der angemeldeten Gattung aus DE-C-1 158 663, DE-C-1 196 815 und aus DE-U-8 815 279.

Bei dem OP-Tisch-System mit auf dem Fußboden fest verankerter OP-Tisch-Säule und abhebbarer OP-Tisch-Platte wird ein Transportwagen unter die OP-Tisch-Platte an die OP-Tisch-Säule gefahren.

Zur fehlerfreien Übergabe der OP-Tisch-Platte auf den Transportwagen ist eine genau übereinstimmende Positionierung der Aufnahme-und Halteelemente von Transportwagen und OP-Tisch-Platte erforderlich.

Deshalb hat der Transportwagen Führungselemente, die Führungsleisten an der fest verankerten OP-Tisch-Säule umgreifen und Anschlagelemente.

Die Führungselemente positionieren den Transportwagen in der OP-Tisch-Querachse und die Anschlagelemente positionieren in der OP-Tisch-Längsachse.

Damit schonend und rückfrei positioniert werden kann, muß der Transportwagen seitlich sehr genau an die OP-Tisch-Säule angefahren werden.

Die Erfindung bezweckt, den Anfahr- und Positioniervorgang so zu verbessern, daß auch dann schonend und rückfrei positioniert werden kann, wenn der Transportwagen seitlich weniger genau, d.h. mit seitlichem Versatz an die OP-Tisch-Säule gefahren wird.

Erreicht wird dieses Ziel dadurch, daß der Transportwagen für die Liegefläche eines Operationstisches mit Führungselementen und Anschlagelementen zur Positionierung des Transportwagens gegenüber der OP-Tisch-Säule ausgerüstet ist und gleichzeitig mindestens zwei Fahrrollen des Transportwagens auf ihrer Achse in Achsrichtung verschiebbar gelagert sind und mittels Federelementen, die in Achsrichtung der Fahrrollen-Achsen wirken in einer vorbestimmten Mittelstellung gehalten werden.

Mit der Erfindung wird erreicht, daß der Transportwagen auch dann genau, schonend und ruckfrei positioniert werden kann, auch wenn er mit seitlichem Versatz an die OP-Tisch-Säule gefahren wird. Die Führungselemente führen den Transportwagen an die OP-Tisch-Säule in die Übernahmeposition. Die in achsrichtung verschiebbar gelagerten Fahrrollen lassen eine seitliche Verschiebung des Transportwagen-Rahmens zu, ohne daß die Fahrrollen selbst auf dem Fußboden seitlich verschoben werden müssen, was ja zum Radieren führte und mit hohem Kraftaufwand verbunden wäre.

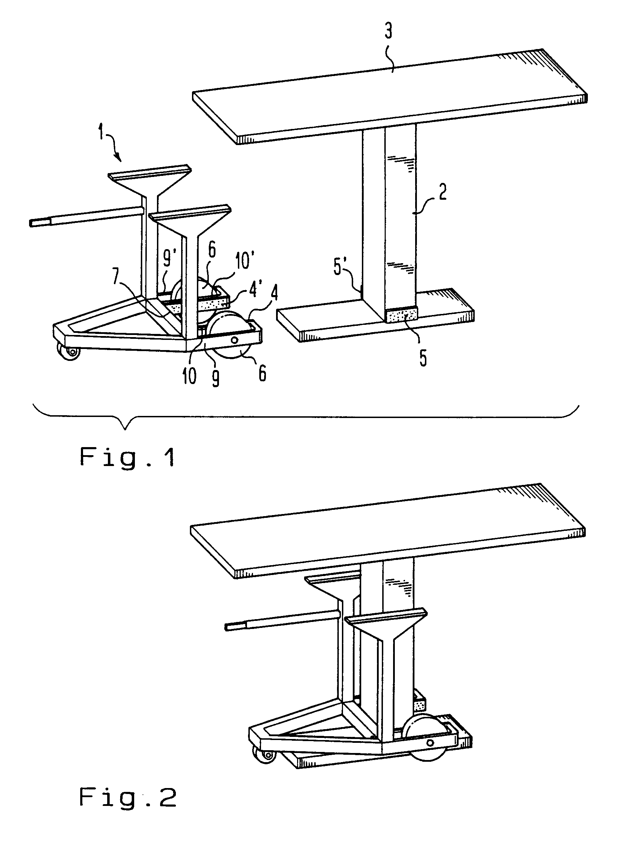

Im folgenden wird die Erfindung anhand von lediglich einem Ausführungsweg darstellenden Zeichnungen näher erläutert. Es zeigt
- Fig. 1: in perspektivischer Darstellung einen Operationstisch mit Operationstischplatte und einem Transportwagen in Bereitschaftsposition
- Fig. 2: in perspektivischer Darstellung einen Operationstisch mit positioniertem Transportwagen

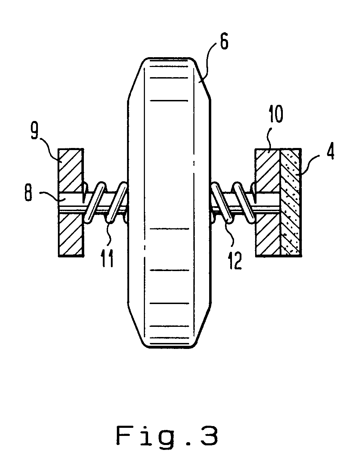

- Fig. 3: eine Fahrrolle mit Achsträger und Führungselement im Schnitt.

Ein Transportwagen 1 für Operationstischplatten 3 hat einen U-förmigen, nach vorne (in Fahrtrichtung zur Positionierung an der Operationstischsäule) offenen Rahmen.
Der Rahmen kann sich vorne gabelförmig teilen in je zwei Achsträger 9, 10 und 9′, 10′.
Zwischen den Achsträgern 9, 10 und 9′, 10′ sind Achsen 8 und 8′ für die zwei vorderen Fahrrollen 6, 6′ befestigt.
Die Fahrrollen 6, 6′ sind achsial verschiebbar auf den Achsen 8, 8′ gelagert.
Federelemente 11, 12′ halten die Fahrrollen 6, 6′ in einer neutralen Mittelstellung.
Die jeweils inneren Achsträgerteile 10, 10′ können für sich als Führungselemente ausgebildet sein, aber es kann auch vorteilhaft sein, wie im Ausführungsbeispiel gezeigt, daß an den Achsträgerteilen 10, 10′ zusätzliche Führungselemente befestigt werden. Während die Achsträgerteile aus Metall bestehen und für die erforderlichen Traglasten ausgelegt sind, können die zusätzlichen Führungselemente aus Nichtmetall oder einem Metall mit guten Gleiteigenschaften bestehen.

Der Transportwagen 1 wird an die Operationstischsäule 2 in die Übernahmeposition für die Operationstischplatte gefahren. Dabei umgreifen die Schenkel des vorne offen U-förmigen Rahmens des Transportwagens 1 die Operationstischsäule 2 und die Führungselemente 4, 4′ oder die Achsträgerteile 10, 10′ gleiten an den Führungsleisten 5, 5′ der Operationstischsäule 2 und positionieren so sanft und schonend den Transportwagen 1 in die Übernahmeposition. Bei Anfahren des Transportwagens 1 mit seitlichem Versatz zur Operationstischsäule 2 erlauben die Federelemente 11, 12 eine seitliche Verschiebung des Transportwagens 1 zu den auf dem Fußboden rollenden Fahrrollen 6, 6′ und somit das ruckfreie Einpassen des Transportwagens 1 in die genaue Übernahmeposition. Ein Anschlagelement 7 am Transportwagen 1 kann die Übernahmeposition in Fahrtrichtung sichern.

Die Federelemente 11 und 12 können z.B. Metall-Druckfedern sein.

Es ist jedoch auch vorgesehen, elastisch verformbare nichtmetallische, die Achse 8 etwa zylindrisch umschließende Hohlteile als Federelemente anzuwenden.

Diese nichtmetallischen Federelemente können mit den Fahrrollen 6 formschlüssig oder kraftschlüssig, z.B. durch Klebung, verbunden sein.

## Patentansprüche

1. Transportwagen (1) für Operationstischplatten (3) eines Operationstisches mit abhebbarer Operationstischplatte (3) dadurch **gekennzeichnet**, daß mindestens zwei Fahrrollen (6) des Transportwagens (1) auf ihren Achsen (8) in Achsrichtung verschiebbar gelagert sind.

2. Transportwagen nach Anspruch 1, dadurch **gekennzeichnet**, daß die Fahrrollen (6) mittels Federelementen (11, 12) die in Achsrichtung der Fahrrollenachsen (8) wirken, in einer vorgesehenen etwa mittigen Stellung gehalten werden.

## Claims

1. A transport carriage (1) for the operating table platform (3) of an operating table with a liftable operating table platform (3), **characterized in** that at least two transport rolls (6) of the transport wagon (1) are supported on their axes (8) for sliding movement in the axial direction.

2. A transport carriage according to claim 1, **characterized in** that the transport rolls (6) are each held in an predetermined somewhat middle position by means of spring elements (11, 12) working on the rolls in the axial direction of the transport roll axes (8).

## Revendications

1. Chariot de transport (1) pour des dessus (3) d'une table d'opération ayant un dessus (3) soulevable, **caractérisé en ce que** au moins deux galets (6) du chariot de transport (1) soient logés sur leurs arbres (8) de manière à être déplaçable en direction d'axe.

2. Chariot de transport selon la revendication 1, **caractérisé en ce que** les galets (6) soient maintenus dans une position prévue environ centrale au moyen d'éléments à ressort agissant en direction d'axe des arbres (8) des galets.
